(19) Europäisches Patentamt
European Patent Office
Office européen des brevets

(11) **EP 1 008 874 B1**

(12) **EUROPEAN PATENT SPECIFICATION**

(45) Date of publication and mention
of the grant of the patent:
**12.12.2001 Bulletin 2001/50**

(51) Int Cl.7: **G02B 6/06**, G06T 1/00,
G01T 1/00, G02B 6/08,
G06K 9/00, H01J 29/89

(21) Application number: **98935278.6**

(22) Date of filing: **30.07.1998**

(86) International application number:
**PCT/JP98/03392**

(87) International publication number:
**WO 99/06860 (11.02.1999 Gazette 1999/06)**

(54) **OPTICAL ELEMENT, AND IMAGING UNIT, IMAGING APPARATUS, RADIATION IMAGE SENSOR AND FINGERPRINT COLLATOR WHICH USE THE SAME**

OPTISCHES ELEMENT UND EINE ABBILDUNGSEINHEIT , ABBILDUNGSVORRICHTUNG, STRAHLUNGSBILDSENSOR UND FINGERABDUCK-ANALYSATOR UNTER VERWENDUNG DERSELBEN

ELEMENT OPTIQUE, UNITE D'IMAGERIE, APPAREIL D'IMAGERIE DETECTEUR D'IMAGE RADIANTE ET ANALYSEUR D'EMPREINTES DIGITALES L'UTILISANT

(84) Designated Contracting States:
**DE FR GB**

(30) Priority: **31.07.1997 JP 20612897**
**30.04.1998 JP 12129498**
**30.04.1998 JP 12131098**
**12.05.1998 JP 12897498**

(43) Date of publication of application:
**14.06.2000 Bulletin 2000/24**

(73) Proprietor: **Hamamatsu Photonics K.K.**
**Shizuoka-ken 435-8558 (JP)**

(72) Inventors:
• **SUGAWARA, Takeo Hamamatsu Photonics K.K.**
**Hamamatsu-shi Shizuoka-ken 435-8558 (JP)**
• **SUZUKI, Makoto Hamamatsu Photonics K.K.**
**Hamamatsu-shi Shizuoka-ken 435-8558 (JP)**

(74) Representative: **Brown, Kenneth Richard et al**
**R.G.C. Jenkins & Co.**
**26 Caxton Street**
**London SW1H 0RJ (GB)**

(56) References cited:

| | |
|---|---|
| **EP-A- 0 692 339** | **JP-A- 2 249 537** |
| **JP-A- 6 051 142** | **JP-A- 8 315 143** |
| **US-A- 4 139 261** | **US-A- 5 360 630** |

• **PATENT ABSTRACTS OF JAPAN vol. 1999, no. 06, 31 March 1999 (1999-03-31) & JP 02 249537 A (PHILIPS GLOEILAMPENFAB:NV), 5 October 1990 (1990-10-05) & EP 0 372 122 A 13 June 1990 (1990-06-13) & US 5 008 547 A**

## Description

Optical Device, and Imaging Unit, Imaging Apparatus, Radiation Image Sensor, and Fingerprint Identifying Apparatus Using the Same

## Technical Field

The present invention relates to an optical device; and an imaging unit, an imaging apparatus, a radiation image sensor, and a fingerprint identifying apparatus which use the same..

## Background Art

Known as an optical member for transmitting an optical image is one in which a plurality of optical fibers are arranged parallel to each other and integrally formed. Also, an optical device transmitting an optical image while enlarging or reducing it to a given magnification by using two optical members, each of which is mentioned above and has respective end faces cut obliquely and perpendicularly with respect to the optical axis, is disclosed, for example, in U.S. Patent No. 3402000. The features of the preamble of claim 1 are, in combination, known from this document and this document further teaches that an output deflecting layer may be frosted to provide diffused light.

## Disclosure of the Invention

However, the above-mentioned optical device has been problematic in that its optical image transmission efficiency is not always sufficient. Therefore, it is an object of the present invention to provide an optical device having a favorable optical image transmission efficiency.

In order to achieve the above-mentioned object, the optical device of the present invention comprises a first optical member, composed of a plurality of optical fibers arranged parallel to each other and integrally formed, having a first entrance surface and a first exit surface which intersect an optical axis at respective angles of $\alpha_1, \beta_1$; and a second optical member, composed of a plurality of optical fibers arranged parallel to each other and integrally formed, having a second entrance surface and a second exit surface which intersect an optical axis at respective angles of $\alpha_2, \beta_2$; wherein at least one of the first exit surface and second entrance surface is ground so as to have a center-line average roughness within the range of 0.20 to 0.80 $\mu$m; and wherein the first exit surface and the second entrance surface are fixed in contact with or close to each other.

Since at least one of the first exit surface and second entrance surface is roughly ground as such, light emitted from the first exit surface can be made incident on the second entrance surface with various incident angles. Therefore, at least a part of the light incident on the second entrance surface can be transmitted through the second optical member while satisfying a total reflection condition. As a result, an optical image incident on the entrance surface can efficiently be transmitted to the exit surface.

## Brief Description of the Drawings

Fig. 1 is a perspective view of an optical device;
Fig. 2 is a schematic sectional view of the optical device;
Fig. 3 is a partly enlarged schematic sectional view of the optical device;
Fig. 4 is a partly enlarged schematic sectional view of the optical device;
Fig. 5 is a view for explaining the use of the optical device;
Fig. 6 is an explanatory view showing light propagation within the optical device;
Fig. 7 is an explanatory view showing light propagation within the optical device;
Fig. 8 is a perspective view of an imaging unit;
Fig. 9 is a perspective view of an imaging apparatus;
Fig. 10 is a perspective view of a radiation image sensor;
Fig. 11 is a schematic sectional view of the radiation image sensor;
Fig. 12 is an explanatory view showing incidence of a radiation onto the radiation image sensor;
Fig. 13 is an explanatory view showing incidence of a radiation onto the radiation image sensor;
Fig. 14 is a configurational view of a fingerprint identifying apparatus;
Fig. 15 is a perspective view of an optical device;
Fig. 16 is a schematic sectional view of the optical device;

Fig. 17 is a perspective view of an optical device;

Fig. 18 is a partly enlarged schematic sectional view of the optical device;

Fig. 19 is a partly enlarged schematic sectional view of the optical device;

Fig. 20 is a partly enlarged schematic sectional view of the optical device;

Fig. 21 is a partly enlarged schematic sectional view of the optical device;

Fig. 22 is a partly enlarged schematic sectional view of the optical device;

Fig. 23 is a perspective view of an imaging apparatus;

Fig. 24 is a perspective view of an imaging apparatus;

Fig. 25 is a perspective view of an imaging apparatus;

Fig. 26 is a perspective view of a radiation image sensor;

Fig. 27 is a schematic sectional view of the radiation image sensor;

Fig. 28 is a schematic sectional view of the radiation image sensor;

Fig. 29 is a schematic sectional view of the radiation image sensor;

Fig. 30 is a schematic sectional view of the radiation image sensor;

Fig. 31 is a schematic sectional view of the radiation image sensor;

Fig. 32 is a schematic sectional view of the radiation image sensor; and

Fig. 33 is a schematic sectional view of the radiation image sensor.

**Best Modes for Carrying Out the Invention**

(1) Optical Device According to Embodiment of Present Invention

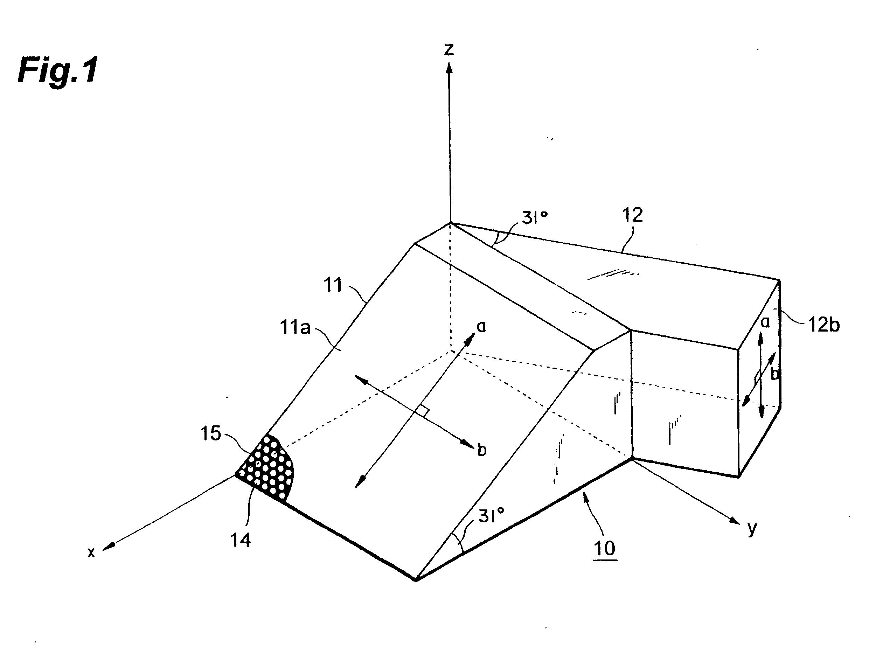

An optical device in accordance with an embodiment of the present invention will be explained with reference to drawings. As shown in Fig. 1, the optical device 10 in accordance with this embodiment is constituted by an input optical member 11 and an output optical member 12 which are combined together.

Each of the input optical member 11 and the output optical member 12 comprises a number of optical fibers 14 which are arranged parallel to each other and integrally formed, whereas gaps among the individual optical fibers 14 are filled with a light-absorbing material 15. In the optical fiber 14 constituting each optical member, the refractive index of its core 14a, the refractive index of its cladding 14b, and its numerical aperture are as shown in Table 1.

TABLE 1

|  | Core Refractive Index | Cladding Refractive Index | Numerical Aperture |
|---|---|---|---|
| Input Optical Member | 1.56 | 1.52 | 0.35 |
| Output Optical Member | 1.82 | 1.495 | 1.0 |

The input optical member 11 has an entrance surface 11a which is obliquely cut with respect to the optical axis (the optical axis of optical fibers constituting the optical member) at an angle of 31° and an exit surface 11b which is cut perpendicular to the optical axis, whereby an optical image-incident on the entrance surface 11a can be outputted to the exit surface 11b while being reduced in a specific direction. Also, the angle (31° ) formed between the optical axis and the entrance surface 11a is such an angle that the light incident on the entrance surface 11a from the air does not satisfy a total reflection condition within the optical fibers 14 constituting the input optical member 11.

As with the input optical member 11, the output optical member 12 has an entrance surface 12a which is obliquely cut with respect to the optical axis at an angle of 31° and an exit surface 12b which is cut perpendicular to the optical axis, whereby an optical image incident on the entrance surface 12a can be outputted to the exit surface 12b while being reduced in a specific direction.

The exit surface 11b of the input optical member 11 and the entrance surface 12a of the output optical member 12 are fixed in contact with each other. Here, a line parallel to both of the entrance surface 11a and exit surface 11b of the input optical member 11 and a line parallel to both of the entrance surface 12a and exit surface 12b of the output optical member 12 are perpendicular to each other. Therefore, the optical image incident on the entrance surface 11a of the input optical member 11 is reduced by the input optical member 11 in the a-axis direction of Fig. 1 and is reduced by the output optical member 12 in the b-axis direction perpendicular to the a-axis direction, so as to be outputted from the exit surface 12b of the output optical member 12.

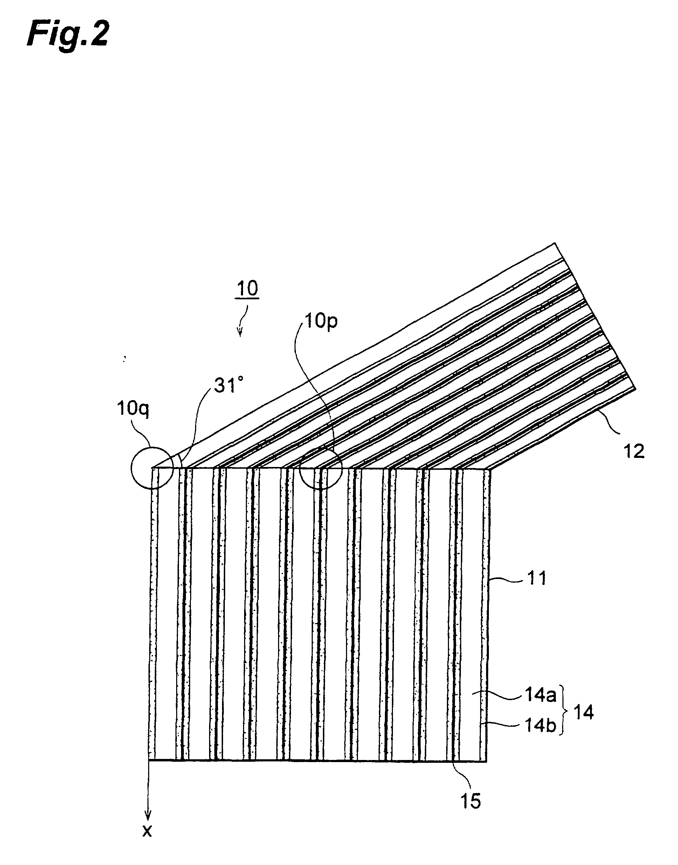

The optical axes of the input optical member 11 and output optical member 12 are parallel to the xy plane of Fig. 1, whereas Fig. 2 shows a cross section of the optical device 10 taken along a plane parallel to the xy plane in Fig. 1. Here, Fig. 2 is a schematic sectional view showing the relationship between the respective optical axes of the optical members, whereas each optical member is a bundle of several thousands of optical fibers in practice.

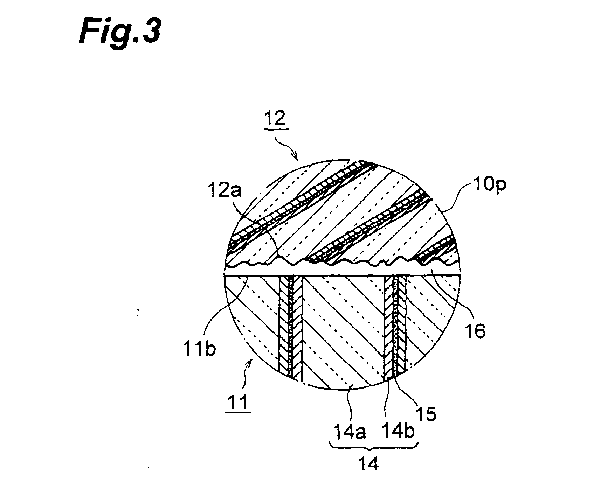

Here, as shown in Fig. 3 which is an enlarged view of a part 10p in Fig. 2, while the exit surface 11b of the input optical member 11 is ground to an optically specular surface, the whole entrance surface 12a of the optical member 12 is roughly ground so as to yield a rough surface having a center-line average roughness of 0.49 $\mu$m. Such a rough surface can easily be formed when the surface is ground with an abrasive in which abrasive grains have an average diameter of about 14 $\mu$m (e.g., Green Carborundum abrasive grains).

Also, since the exit surface lib of the input optical member 11 is flat (specular), whereas the entrance surface 12a of the output optical member 12 is a rough surface, a gap 16 filled with the air is formed between the exit surface 11b of the input optical member 11 and the entrance surface 12a of the output optical member 12.

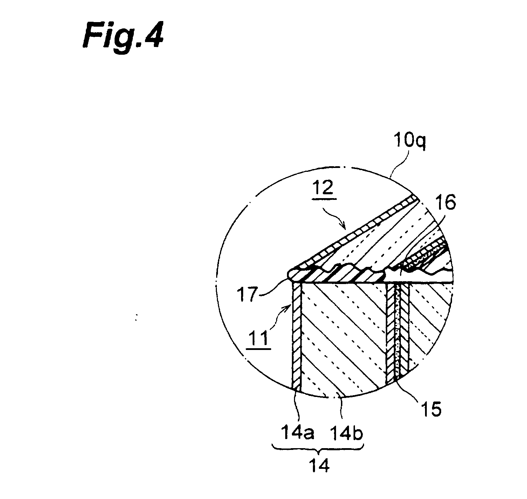

On the other hand, as shown in Fig. 4 which is an enlarged view of a part 10q in Fig. 2, the exit surface 11b of the input optical member 11 and the entrance surface 12a of the optical member 12 are joined together as their edge side portions are bonded to each other with an adhesive 17.

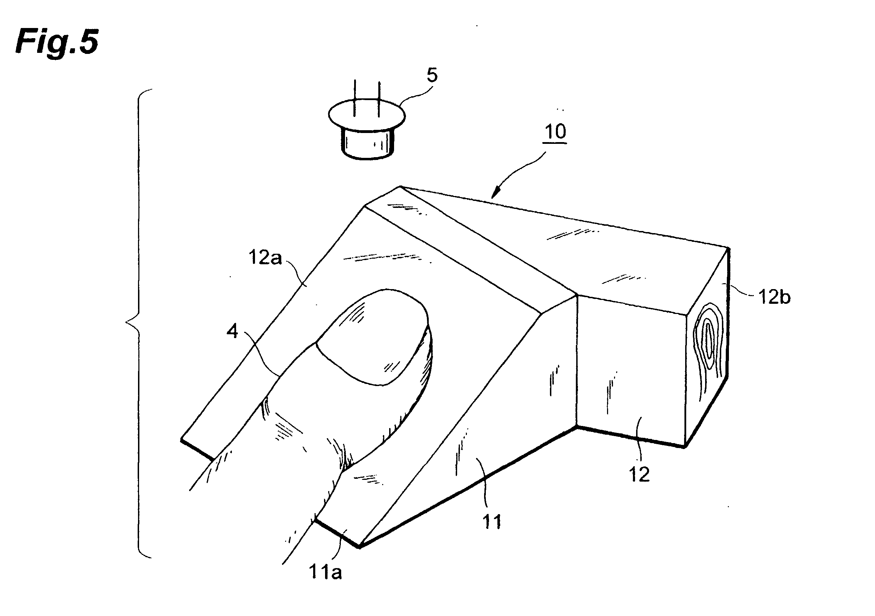

For example, when the optical device 10 is used for reducing and capturing a fingerprint image, it is arranged as shown in Fig. 5. Namely, a finger 4 is brought into contact with the entrance surface 11a of the input optical member 11, and light is projected from above the finger 4 by use of an LED 5 or the like. The angle formed between the optical axis of the input optical member 11 and the entrance surface 11a is set to 31° such that the incident light from the air does not satisfy a total reflection condition within the optical fibers 14 constituting the input optical member 11. As a consequence, the light incident on the input optical member 11 from the air attenuates and disappears within the input optical member 11. By contrast, a part of the light incident on the input optical member 11 by way of the contact portion (protrusions of the fingerprint) of the finger 4 propagates through the optical device 10 while satisfying the total reflection condition. Hence, when the optical image formed on the exit surface 12b of the output optical member 12 is captured with a CCD camera or the like, a reduced fingerprint image can be obtained.

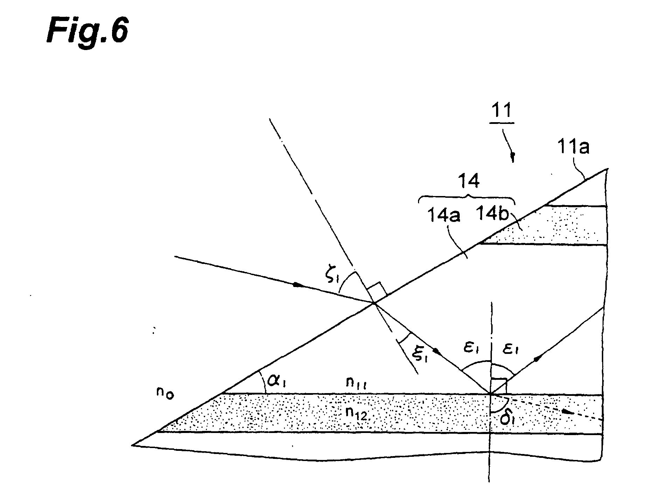

Operations of the optical device in accordance with this embodiment will now be explained. First, a case where the light incident on the entrance surface 11a of the input optical member 11 from the air propagates while being refracted and reflected by the core/cladding interface of the optical fibers 14 constituting the input optical member 11 as shown in Fig. 6 will be considered. Here, let $n_0$ be the refractive index of the air, and $n_{11}$ and $n_{12}$ be the respective refractive indices of the core 14a and cladding 14b of the optical fibers 14 constituting the input optical member 11. Also, let $\alpha_1$ be the angle formed between the optical axis of the input optical member 11 and its entrance surface 11a, $\zeta_1$ be the angle of incidence of light incident on the entrance surface 11a of the input optical member 11 from the air, $\xi_1$ be the angle of refraction thereof, $\varepsilon_1$ be the angle of incidence of light incident on the cladding 14b of the input optical member 11 from its core 14a, and $\delta_1$ be the angle of refraction thereof.

The relationship between $\zeta_1$ and $\xi_1$ is expressed by

$$n_0 \sin \zeta_1 = n_{11} \sin \xi_1 \tag{1}$$

from the law of refraction. As a consequence, the incident light from all directions ($0° \leqq \zeta_1 \leqq 90°$) in the air enters the input optical member 11 from its entrance surface 11a within the range of $\xi_1$ satisfying

$$0 \leqq \sin \xi_1 \leqq n_0/n_{11}. \tag{2}$$

On the other hand, $\alpha_1$, $\xi_1$, and $\varepsilon_1$ have a relationship of

$$\alpha_1 + (90° + \xi_1) + (90° - \varepsilon_1) = 180° \tag{3}$$

as seen from Fig. 6.

Therefore, if expression (3) is used for determining $\alpha_1$ so as not to satisfy the total reflection condition in the core/cladding interface

$$\sin \varepsilon_1 > n_{12}/n_{11} \tag{4}$$

in all $\varepsilon_1$ satisfying expression (2), then the light incident on the input optical member 11 from the air will attenuate and disappear within the input optical member 11, and will not propagate therethrough.

On the other hand, a part of the light incident on the input optical member 11 from the contact portion of a sample such as a finger, which is a material having a refractive index higher than that of the air, with respect to the entrance surface 11a satisfies the total reflection condition, thereby propagating through the input optical member 11.

In the optical device 10 in accordance with this embodiment, since $n_{11}$ = 1.56, and $n_{12}$ = 1.52, the light incident on the entrance surface 11a of the input optical member 11 from the air can be attenuated and extinguished within the input optical member 11 if $\alpha_1$ is set to 37.1° or less (assuming that the refractive index of air $n_0$ = 1.00). Here, in the optical device 10 in accordance with this embodiment, $\alpha_1$ is set to 31° in view of the efficiency of reduction.

Also, since the angle $\alpha_1$ formed between the optical axis and the entrance surface 11a is set to 31°, and the exit surface 11b is made perpendicular to the optical axis, the input optical member 11 acts to reduce the optical image incident on the entrance surface 11a to 0.52 (sin31° ) in size in the a-axis direction and output thus reduced image to the exit surface 11b.

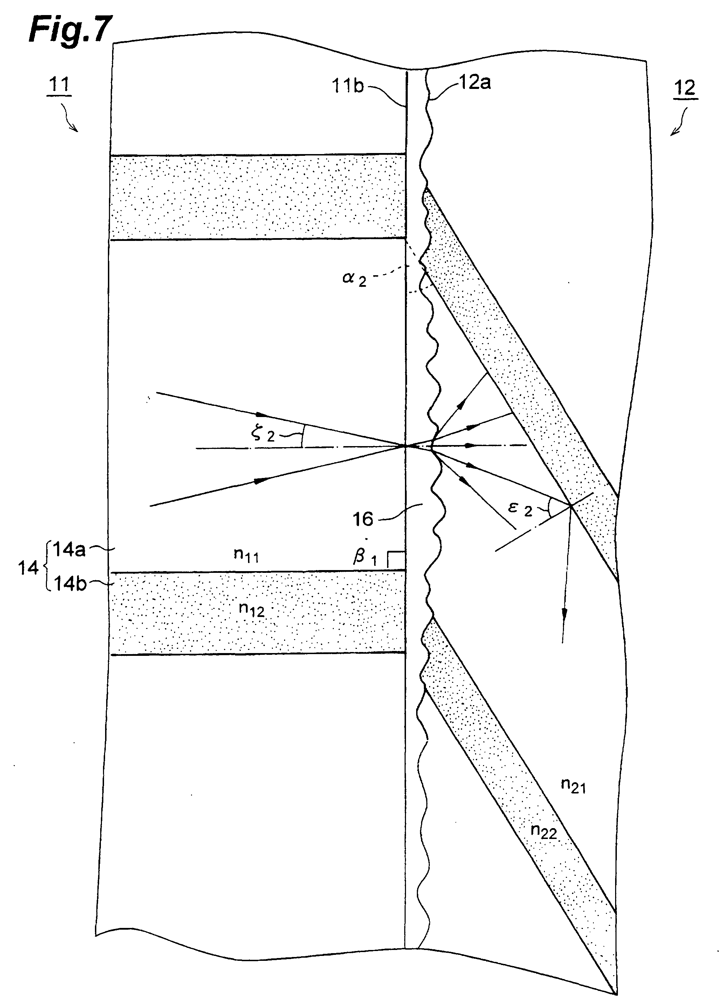

A case where light is incident on the entrance surface 12a of the output optical member 12 from the exit surface 11b of the input optical member 11 and propagates while being refracted and reflected by the core/cladding interface of the optical fibers 14 constituting the output optical member 12 as shown in Fig. 7 will now be considered. Here, let $n_{11}$ and $n_{12}$ be the respective refractive indices of the core 14a and cladding 14b of the optical fibers 14 constituting the input optical member 11, and $n_{21}$ and $n_{22}$ be the respective refractive indices of the core 14a and cladding 14b of the optical fibers 14 constituting the output optical member 12. The light propagating through the input optical member 11 satisfies the total reflection condition at the core/cladding interface of the optical fibers 14 constituting the input optical member 11. Here, since $n_{11}$ = 1.56, and $n_{12}$ = 1.52, the light within the input optical member 11 propagates with an angle of 13° or less with respect to the optical axis. Here, since the angle $\beta_1$ formed between the optical axis of the input optical member 11 and its exit surface 11b is a right angle, the incident angle $\zeta_2$ of the light having propagated through the input optical member 11 upon the exit surface 11b becomes 13° or less. Therefore, if the entrance surface 12a of the output optical member 12 were a specular surface and in close contact with the exit surface 11b of the input optical member 11, the light incident on the output optical member 12 would attenuate and disappear within the optical fibers 14 constituting the output optical member 12 without satisfying the total reflection condition, since the angle formed between the optical axis of the input optical member 11 and the optical axis of the output optical member 12 is a very large angle of 59° .

In the optical device 10 in accordance with this embodiment, however, the exit surface 12a of the output optical member 12 is a rough surface. Therefore, the light outputted from the exit surface 11b of the input optical member 11 and transmitted through the gap 16 filled with the air generates scattering at the entrance surface 12a of the output optical member 12. In the scattered light, there exist light components satisfying the total reflection condition at the core/cladding interface of the optical fibers 14 constituting the output optical member 12 (the incident angle $\varepsilon_2$ with respect to the cladding 14b being 55° or greater in the output optical member 12 in the optical device 10 in accordance with this embodiment), and these light components would propagate to the exit surface 12b of the output optical member 12 without attenuating.

Also, the entrance surface 12a of the output optical member 12 is ground not in a specific direction alone but randomly so as to yield a center-line roughness within the range of 0.20 to 0.80 µm (about 1/10 to 1/100 of the diameter of the optical fiber 14). Therefore, the range of incident angle of the light incident on the entrance surface 12a of the output optical member 12 can be widened efficiently and uniformly.

Effects of the optical device in accordance with this embodiment will now be explained. In the optical device 10 in accordance with this embodiment, since the entrance surface 12a of the output optical member 12 is made as a rough surface, the incident light from the exit surface 11b of the input optical member 11 is scattered at the entrance surface 12a of the output optical member 12, so as to yield light which propagates through the optical fibers 14 constituting the output optical member 12 while satisfying the total reflection condition therein.

Further, since the center-line roughness of the entrance surface 12a of the output optical member 12 is within the range of 0.2 to 0.8 µm, which is about 1/10 to 1/100 of the diameter of the optical fiber 14, the range of incident angle of the light incident on the entrance surface 12a of the output optical member 12 can be widened efficiently and uniformly.

As a result, the optical image incident on the entrance surface 11a of the input optical member 11 can efficiently be transmitted to the exit surface 12b of the output optical member 12 while satisfying the total reflection condition within the input optical member 11 and output optical member 12, and an output image with a high resolution can be obtained at the same time. Also, since the entrance surface 12a of the output optical member 12 is ground not in a specific direction alone but randomly, the resolutions of the incident image in the vertical and horizontal directions can match each other, whereby a clear output image can be obtained.

Further, the optical device 10 in accordance with this embodiment achieves the object of efficiently transmitting the optical image incident on the entrance surface 11a of the input optical member 11 to the exit surface 12b of the output optical member 12 by addition of a simple step of grinding the entrance surface 12a of the output optical member 12 with an abrasive. Therefore, it is not necessary to provide the junction of two optical members with a special optical plate or the like requiring a higher degree of processing control, whereby the optical device can be made at a lower cost.

In the optical device 10 in accordance with this embodiment, the angles formed between the optical axis of the input optical member 11 and the entrance surface 11a and exit surface 11b, and the angles formed between the optical axis of the output optical member 12 and the entrance surface 12a and exit surface 12b can freely be set so as to satisfy a desirable demagnification.

(2) Imaging Unit Using Optical Device According to Embodiment of Present Invention

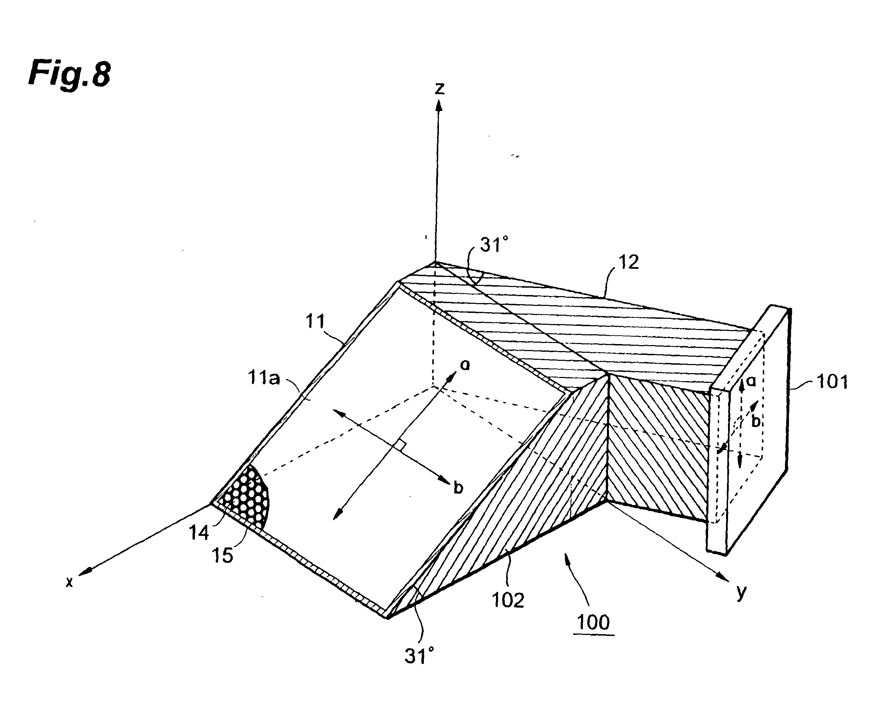

An imaging unit using the optical device in accordance with the above-mentioned embodiment will now be explained with reference to a drawing. First, the configuration of the imaging unit using the optical device in accordance with the above-mentioned embodiment will be explained. The imaging unit 100 comprises, as shown in Fig. 8, the above-mentioned optical device 10 (i.e., optical device 10 comprising the input optical member 11 and the output optical member 12) and a CCD 101 disposed in contact with the exit surface 12b of the output optical member 12. Here, more specifically, the exit surface 12b of the output optical member 12 is in contact with the light-receiving surface of the CCD 101.

Further, all the surfaces (hereinafter referred to as side faces) of the input optical member 11 excluding the entrance surface 11a and exit surface 11b and the side faces of the output optical member 12 are provided with a light-shielding material 102 (see the hatched areas of Fig. 8).

The side faces of each optical member can be provided with the light-shielding material 102 by a method in which the entrance surface and exit surface of each optical member are masked and then a light-shielding agent (e. g., black paint) is sprayed on the side faces, a method in which the light-shielding agent is applied to the side faces with a brush, a method in which the optical member is immersed into a vessel filled with the light-shielding agent, or the like.

Operations and effects of the imaging unit using the optical device in accordance with the above-mentioned embodiment will now be explained. Since the imaging unit 100 comprises the above-mentioned optical device 10, the optical image incident on the entrance surface 11a of the input optical member 11 can efficiently be transmitted to the exit surface 12b of the output optical member 12.

Also, since the CCD 101 is disposed in contact with the exit surface 12b of the output optical member 12, the imaging unit 100 can capture the optical image transmitted to the exit surface 12b of the output optical member 12.

Further, in the imaging unit 100, since the light-shielding material 102 is disposed on the side faces of each optical member, light is prevented from entering each optical member from the side faces thereof, whereby the S/N ratio can be enhanced.

As a result, the imaging unit 100 can capture a clear, high-contrast, high-resolution, reduced image.

(3) Imaging Apparatus Using Optical Device According to Embodiment of Present Invention

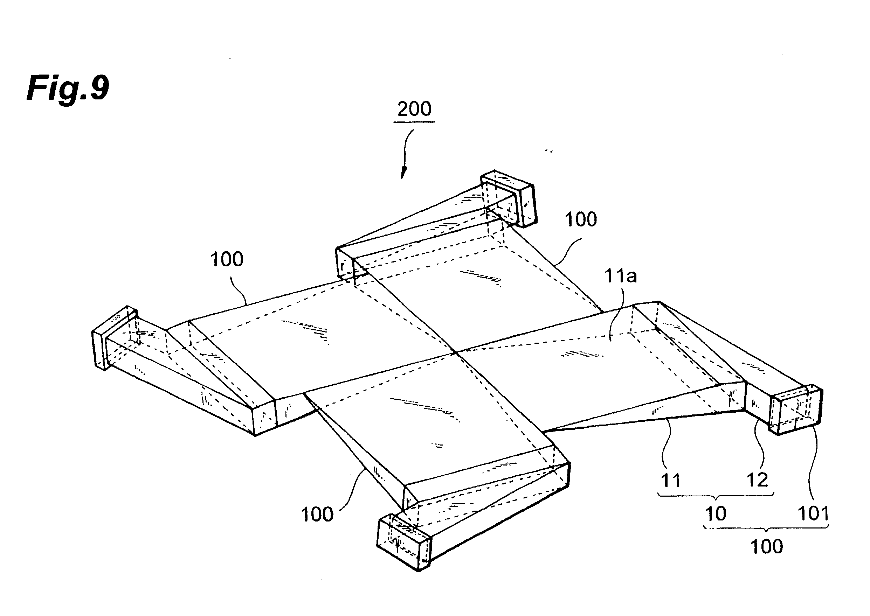

An imaging apparatus using the optical device in accordance with the above-mentioned embodiment will now be explained with reference to a drawing. First, the configuration of the imaging apparatus using the optical device in accordance with the above-mentioned embodiment will be explained. As shown in Fig. 9, the imaging apparatus 200 has four sets of imaging units 100 mentioned above, and is configured such that the individual imaging units 100 are arranged such that the respective entrance surfaces 11a of the input optical members 11 constituting the individual imaging units 100 align on substantially the same plane.

Operations and effects of the imaging apparatus using the optical device in accordance with the above-mentioned embodiment will now be explained. Since the imaging apparatus 200 comprises the above-mentioned imaging unit 100, it can capture a clear, high-contrast, high-resolution, reduced image.

Further, in the imaging apparatus 200, the four sets of imaging units 100 are arranged such that the respective entrance surfaces 11a of the input optical members 11 constituting the individual imaging units 100 align on substantially the same plane. Hence, the light-receiving surface capable of inputting optical images can be enlarged. Here, though a reduced image is divided into the individual CCDs 101 so as to be captured thereby, the whole reduced image can be reproduced when the images captured by the individual CCDs 101 are combined by an image processing unit or the like.

Also, since the imaging apparatus 200 has a very simple configuration comprising a plurality of simple optical members and CCDs, it can be made quite inexpensively as compared with tapered fiber optical members and the like which are similarly made in order to enlarge the light-receiving surface.

Further, in the imaging apparatus 200, since a plurality of imaging units each combining a plurality of optical members together are arranged, the respective CCDs 101 in the individual imaging units 100 would not be placed at positions adjoining each other. As a result, there would be no restriction in terms of arrangement caused by the fact that the outer shape of the CCD 101 is greater than its effective light-receiving surface.

(4) Radiation Image Sensor Using Optical Device According to Embodiment of Present invention

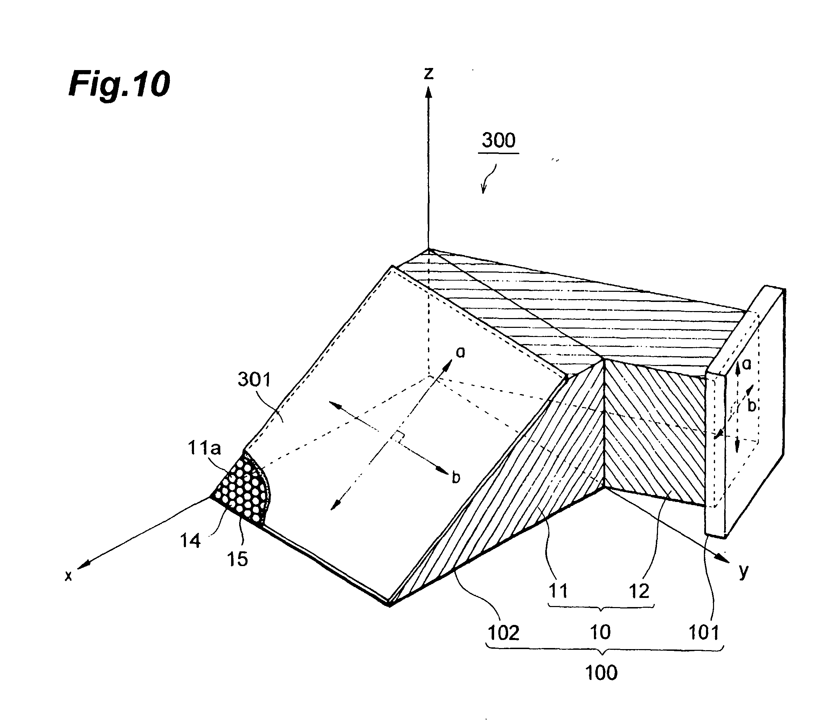

A radiation image sensor using the optical device in accordance with the above-mentioned embodiment will now be explained with reference to drawings. First, the configuration of the radiation image sensor using the optical device in accordance with the above-mentioned embodiment will be explained. The radiation image sensor 300 comprises, as shown in Fig. 10, the above-mentioned imaging unit 100 (i.e., imaging unit 100 comprising the input optical member 11, the output optical member 12, the CCD 101, and the light-shielding material 102), and a phosphor 301 which is disposed on the entrance surface 11a of the input optical member 11 constituting the above-mentioned imaging unit 100 and is adapted to emit light upon incidence of a radiation. As the material of the phosphor 301, $Gd_2O_2S$:Tb or the like may be used, for example.

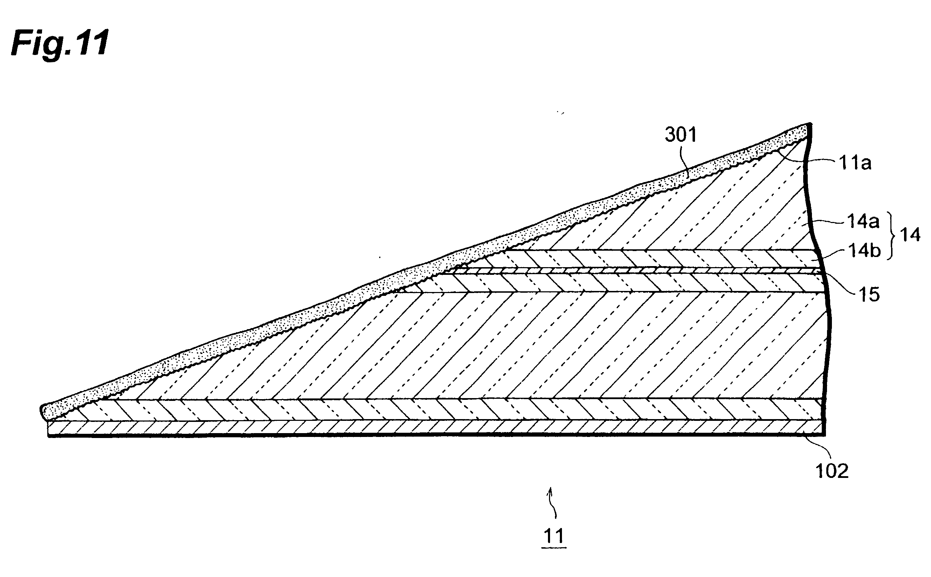

Here, as shown in Fig. 11, which is an enlarged sectional view of the input optical member 11 taken along a plane parallel to the xz plane of Fig. 10, the entrance surface 11a of the input optical member 11 is ground such that the center-line average roughness lies within the range of 0.20 to 0.80 $\mu$m (hereinafter referred to as roughly ground). A ground surface having such a range of center-line average roughness can easily be formed, for example, when the surface is ground with an abrasive in which abrasive grains have an average diameter on the order of 6 to 30 $\mu$m (e. g., Green Carborundum abrasive grains).

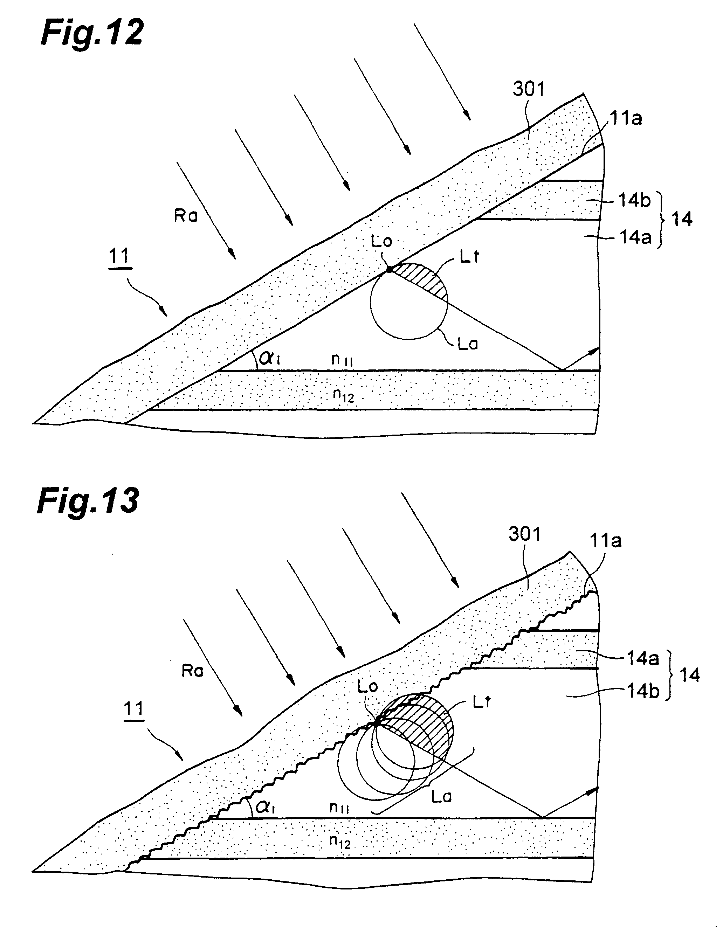

Operations and effects of the radiation image sensor using the optical device in accordance with the above-mentioned embodiment will now be explained. First, a case where light emitted by the radiation incident on the phosphor 301 enters the input optical member 11 will be considered. Fig. 12 shows the state of incidence of light in the case where the entrance surface 11a is not roughly ground, whereas Fig. 13 shows the state of incidence of light in the case where the entrance surface 11a is roughly ground as in the above-mentioned radiation image sensor 300. As shown in Figs. 12 and 13, the light emitted at a specific point $L_0$ within the phosphor 301 by the radiation $R_a$ incident on the entrance surface 11a from the normal direction of the entrance surface 11a enters the input optical member 11 as diffused light having a maximum intensity in the normal direction of the entrance surface 11a. $L_a$ is a circle indicating the advancing direction and intensity of the light emitted at $L_0$. Namely, the length of the chord formed by a line drawn from $L_0$ in a specific direction and this circle indicates the intensity of light advancing in the specific direction. Also, the hatched area $L_t$ indicates, of the light emitted at $L_0$, the part propagating through the input optical member 11 while satisfying the total reflection condition.

Here, as shown in Fig. 12, the part of light $L_t$ propagating through the input optical member 11 while satisfying the total reflection condition is quite small in the case where the entrance surface 11a is not roughly ground; whereas, as shown in Fig. 13, in the case where the entrance surface 11a is roughly ground, diffused light is scattered so as to have the maximum intensity in various directions, whereby the part of light (hatched area $L_t$) propagating through the input optical member 11 while satisfying the total reflection condition becomes quite large.

Also, since the radiation image sensor 300 comprises the above-mentioned optical device 10, it can efficiently transmit the optical image incident on the entrance surface 11a of the input optical member 11 to the exit surface 12b of the output optical member 12, so that this optical image can be captured by the CCD 101.

As a result, the radiation image sensor 300 can capture, in a clear, high-contrast, high-resolution state, a reduced image of the radiation image incident on the phosphor 301.

Also, since the radiation image sensor 300 combines two optical members together, the position where the CCD 101, which is a sensor section, is disposed deviates from the part directly below the entrance surface 11a of the input optical member 11, which is a detection surface, whereby the influences of damage or noise received by the sensor section from the radiation incident on the detection surface can be reduced.

(5) Fingerprint Identifying Apparatus Using Optical Device According to Embodiment of Present Invention

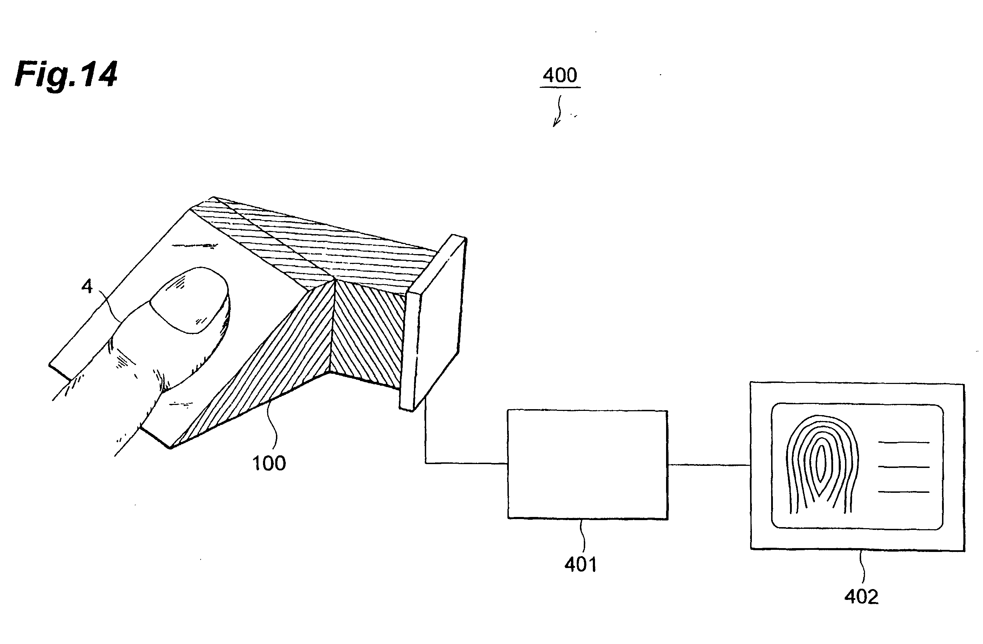

A fingerprint identifying apparatus using the optical device in accordance with the above-mentioned embodiment will now be explained with reference to a drawing. First, the configuration of the fingerprint identifying apparatus using the optical device in accordance with the above-mentioned embodiment will be explained. Fig. 14 is a schematic configurational view of the fingerprint identifying apparatus 400 using the optical device in accordance with the above-mentioned embodiment. The fingerprint identifying apparatus 400 comprises an imaging unit for capturing an image of a fingerprint, an information processing unit 401 which is a fingerprint identifying section for identifying the fingerprint image captured by the above-mentioned imaging unit with a reference pattern registered beforehand, and a display 402 which is a display section for displaying a result of identification obtained by the information processing unit 401.

As the imaging unit for capturing the fingerprint, the imaging unit 100 using the optical device in accordance with the above-mentioned embodiment explained in the foregoing is employed.

The information processing unit 401 comprises a memory for temporarily storing the fingerprint image outputted from the imaging unit 100, a storage device for storing the reference pattern, and an arithmetic unit for identifying the fingerprint image captured by the imaging unit with the reference pattern stored in the storage device.

Operations and effects of the fingerprint identifying apparatus using the optical device in accordance with the above-mentioned embodiment will now be explained. When a finger 4 is brought into contact with the entrance surface 11a of the input optical member 11 constituting the imaging unit 100, then, as explained with reference to Fig. 5, the fingerprint image is transmitted to the exit surface 12b of the output optical member 12 and is captured by the CCD 101.

The fingerprint image captured by the CCD 101 constituting the imaging unit 100 is outputted to the information processing unit 401 and is temporarily stored in the memory. Thereafter, the fingerprint image is identified by the arithmetic unit with the reference pattern registered in the storage device beforehand, and the result of identification is displayed on the display 402 together with the captured fingerprint image and the like.

Since the fingerprint identifying apparatus 400 comprises the above-mentioned optical device 10, it can efficiently transmit the optical image incident on the entrance surface 11a of the input optical device 11 to the exit surface 12b of the output optical member 12. Hence, the CCD 101 can capture a clear, high-contrast, high-resolution, reduced image. As a result, the fingerprint identifying apparatus 400 enables fingerprint identification with a high accuracy with less misidentification.

(6) Modified Examples of Optical Device According to Embodiment of Present Invention

i) First Modified Example

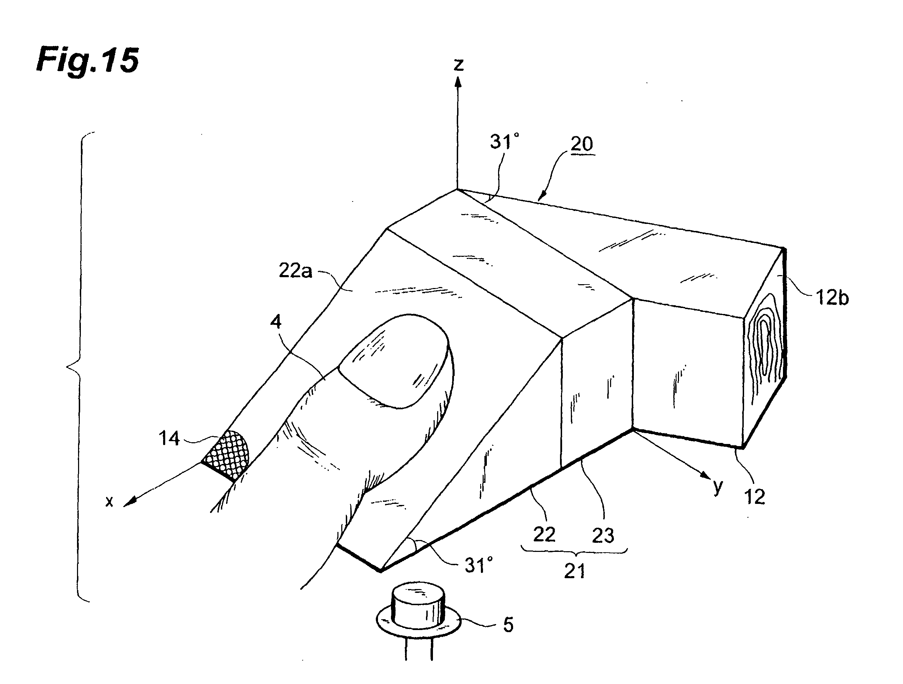

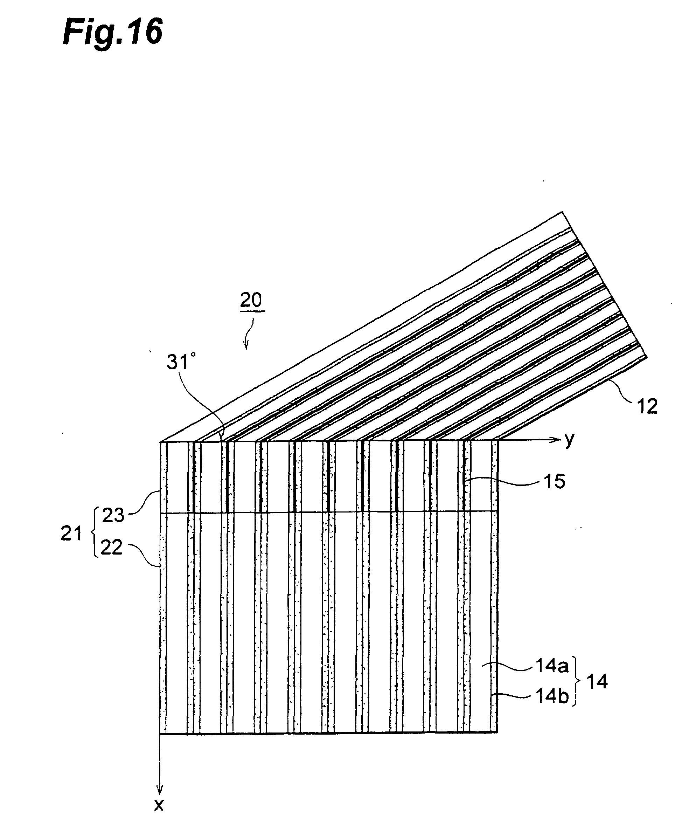

The optical device in accordance with a first modified example will now be explained. Fig. 15 shows the configuration of the optical device 20 in accordance with this modified example. The optical device 20 in accordance with this modified example structurally differs from the optical device 10 in accordance with the above-mentioned embodiment in that, while the gaps among the individual optical fibers 14 in the input optical member 11 used in the optical device 10 in accordance with the above-mentioned embodiment are filled with the light-absorbing material 15, the input optical member 21 used in the optical device 20 in accordance with this modified example is constituted by a first member 22 in which the gaps among the individual optical fibers 14 are not filled with the light-absorbing material 15 and a second member 23 in which the gaps among the individual optical fibers 14 are filled with the light-absorbing material 15. The first member 22 is constituted by an optical member composed of a number of optical fibers 14 arranged parallel to each other and integrally formed while the gaps among the individual optical fibers 14 are not filled with the light-absorbing material 15, wherein its entrance surface 22a forms an angle of 31° with the optical axis such that the incident light from the air does not satisfy the total reflection condition, whereas its exit surface 22b is perpendicular to the optical axis. Also, the second member 23 is constituted by an optical member composed of a number of optical fibers 14 arranged parallel to each other and integrally formed while the gaps among the individual optical fibers 14 are filled with the light-absorbing material 15, wherein its entrance surface 23a and exit surface 23b are perpendicular to the optical axis. The entrance surface 23a of the second member 23 is in contact with the exit surface 22b of the first member 22, whereas the exit surface 23b of the second member 23 is fixed in contact with the entrance surface 12a of the output optical member 12. Also, both of the optical axes of the first member 22 and second member 23 are parallel to the xy plane of Fig. 15. Consequently, when the optical device 20 is cut along a plane parallel to the xy plane in Fig. 15, a cross section shown in Fig. 16 is obtained.

When the optical device 20 is used for fingerprint detection or the like, as shown in Fig. 15, the finger 4 is brought into contact with the entrance surface 22a of the first member 22, and light is projected by an LED 5 or the like from below the first member 22. The light projected from the LED 5 or the like is transmitted through the first member 22 from the bottom to the top and is reflected by the entrance surface 22a. If a protrusion of the fingerprint is in contact with the entrance surface 22a, then the projected light is not reflected at this portion and is absorbed. As a consequence, the light reflected by the part other than the contact portion of protrusions of the fingerprint is transmitted through each optical member and is outputted from the exit surface 12b of the output optical member 12 as a fingerprint pattern.

In particular, the second member 23 acts to prevent the S/N ratio of the output image from deteriorating due to the illumination light emitted from the LED 5 or the like directly entering the output optical member 12 or the light scattered within the first member 22 entering the output optical member 12.

As with the optical device 10 in accordance with the above-mentioned embodiment, the optical device 20 in accordance with this example can efficiently transmit the optical image incident from the entrance surface 22a of the first member 22 of the input optical member 21 to the exit surface 12b of the output optical member 12, thereby yielding an output pattern with a high resolution.

ii) Second Modified Example

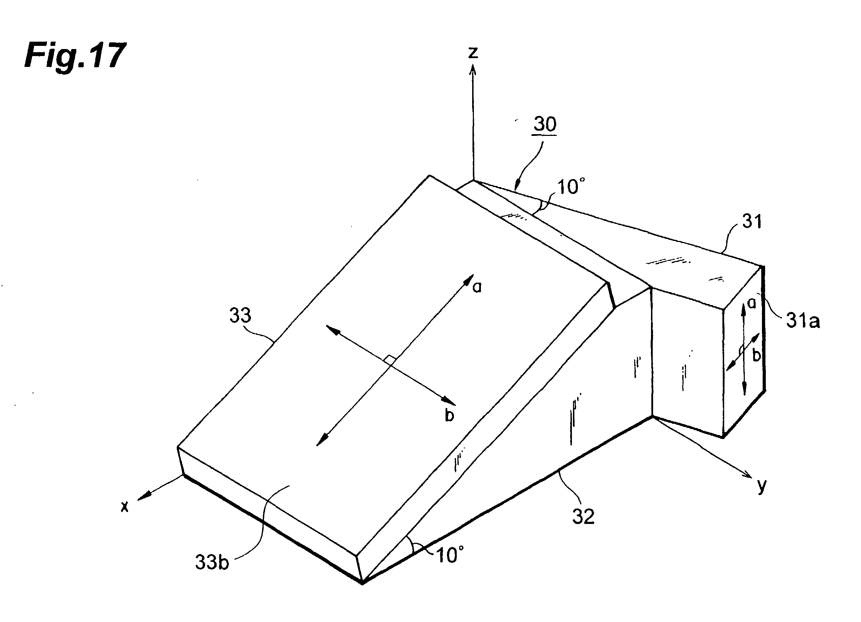

The optical device in accordance with a second modified example will now be explained with reference to a drawing. The optical device in accordance with this modified example is an optical device which similarly enlarges an input image. First, the configuration of the optical device in accordance with this modified example will be explained. The optical device 30 comprises, as shown in Fig. 17, an input optical member 31, an output optical member 32, and a display optical member 33.

Each of the input optical member 31, output optical member 32, and display optical member 33 is composed of a number of optical fibers arranged parallel to each other and integrally formed, whereas gaps among the individual optical fibers 14 are filled with a light-absorbing material 15. In the optical fibers 14 constituting each optical member, the refractive index of the core 14a, the refractive index of the cladding 14b, and the numerical aperture are as shown in Table 2.

TABLE 2

|  | Core Refractive Index | Cladding Refractive Index | Numerical Aperture |
|---|---|---|---|
| Input Optical Member | 1.82 | 1.495 | 1.0 |
| Output Optical Member | 1.82 | 1.495 | 1.0 |
| Display Optical Member | 1.82 | 1.495 | 1.0 |

The input optical member 31 has an entrance surface 31a which is perpendicularly cut with respect to the optical axis, and an exit surface 31b which is obliquely cut with respect to the optical axis at an angle of 10° , whereby an optical image incident on the entrance surface 31a can be outputted to the exit surface 31b while being enlarged in a specific direction.

As with the input optical member 31, the output optical member 32 has an entrance surface 32a which is perpendicularly cut with respect to the optical axis, and an exit surface 32b which is obliquely cut with respect to the optical axis at an angle of 10° , whereby an optical image incident on the entrance surface 32a can be outputted to the exit surface 32b while being enlarged in a specific direction.

The display optical member 33 has an entrance surface 33a which is obliquely cut with respect to the optical axis at an angle of 55° and an exit surface 33b which is cut parallel to the entrance surface 33a, whereby an optical image incident on the entrance surface 33a can be outputted to the exit surface 33b.

The exit surface 31b of the input optical member 31 and the entrance surface 32a of the output optical member 32 are in contact with each other, and the exit surface 32b of the output optical member 32 and the entrance surface 33a of the display optical member 33 are in contact with each other. Here, a line parallel to both of the entrance surface 31a and exit surface 31b of the input optical member 31 and a line parallel to both of the entrance surface 32a and exit surface 32b of the output optical member 32 are perpendicular to each other. As a consequence, the optical image incident on the entrance surface 31a of the input optical member 31 is enlarged in the b-axis direction of Fig. 17 by the input optical member 31 and in the a-axis direction perpendicular to the b-axis direction by the output optical member 32, so as to be outputted from the exit surface 32b of the output optical member 32.

While the exit surface 31b of the input optical member 31 is ground to an optically specular surface, the whole entrance surface 32a of the output optical member 32 is roughly ground so as to yield a rough surface having a center-line average roughness of 0.49 $\mu$m. Such a rough surface can easily be formed when the surface is ground with an abrasive in which abrasive grains have an average diameter of about 14$\mu$m (e.g., Green Carborundum abrasive grains).

Also, since the exit surface 31b of the input optical member 31 is flat (specular), whereas the entrance surface 32a of the output optical member 32 is a rough surface, a gap 16 filled with the air is formed between the exit surface 31b of the input optical member 31 and the entrance surface 32a of the output optical member 32. The exit surface 31b of the input optical member 31 and the entrance surface 32a of the optical member 32 are joined together as their edge side portions are bonded to each other with an adhesive 17.

Operations and effects of the optical device in accordance with this modified example will now be explained. As a consequence of the above-mentioned configuration, the optical device 30 can efficiently enlarge and transmit the optical image incident on the entrance surface 31a of the input optical member 31, so as to yield an enlarged image with a high resolution from the exit surface 33b of the display optical member 33.

Also, since the optical device 30 comprises the display optical member 33, it can cause the light outputted from the exit surface 32b of the output optical member 32 toward the oblique surface to be emitted perpendicular to the viewing surface, whereby a brighter, clearer enlarged image can be obtained.

In the optical device 30 in accordance with this modified example, the angle formed between the optical axis of the input optical member 31 and its exit surface 31b is not needed to be restricted to 10° but may be set freely so as to satisfy a desirable magnification.

iii) Other Modified Examples

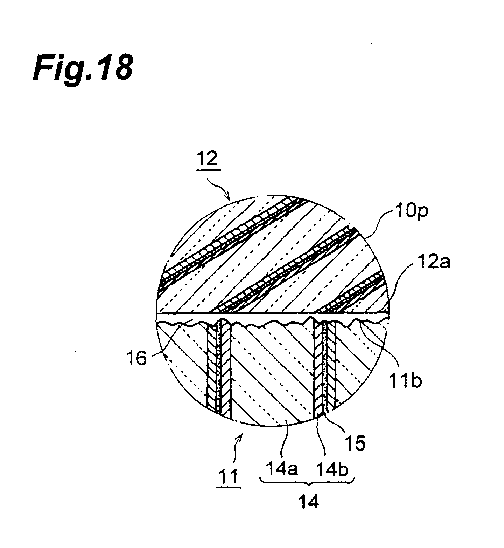

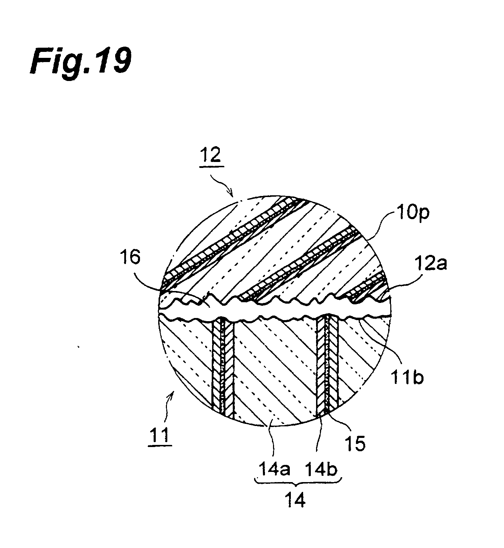

Though the entrance surface 12a of the output optical member 12 in the optical device 10 in accordance with the above-mentioned embodiment is ground to form a rough surface so as to generate scattered light at the entrance surface 12a of the output optical member 12, the exit surface 11b of the input optical member 11 may be ground to form a rough surface, as shown in Fig. 18 which is a partly enlarged view of the joined surfaces, so as generate scattered light at the exit surface 11b of the input optical member 11. Similarly, as shown in Fig. 19, both of the exit surface 11b of the input optical member 11 and the entrance surface 12a of the output optical member 12 may be ground to form rough surfaces, so as to generate scattered light at both of these surfaces.

When the optical device 10 has any of these configurations, the optical image incident on the entrance surface 11a of the input optical member 11 can efficiently be transmitted to the exit surface 12b of the output optical member 12, whereby an output image with a high resolution can be obtained from the exit surface 12b of the output optical member 12.

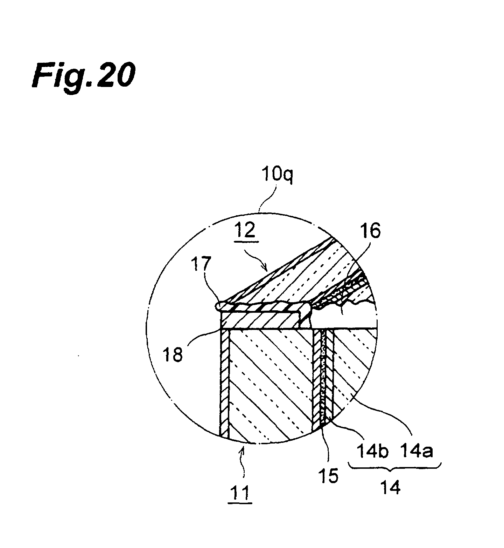

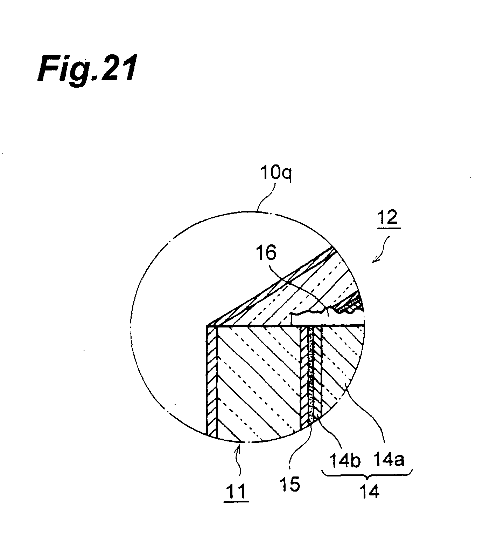

Also, while the exit surface 11b of the input optical member 11 and the entrance surface 12a of the output optical member 12 are joined together as their edge side portions are bonded to each other with the adhesive 17 in the optical device 10 in accordance with the above-mentioned embodiment, they may be joined together with the adhesive 17 by way of a spacer 18 disposed between the edge side portions as shown in Fig. 20. Also, as shown in Fig. 21, an edge side portion of the entrance surface 12a of the output optical member 12 may be formed with a protrusion having a flat surface (i.e., a depression is formed at the center part and is ground so as to cause peripheral portions to have a relatively protruded form), and the resulting protrusion and the exit surface 11b of the input optical member 11 may be joined together by bonding.

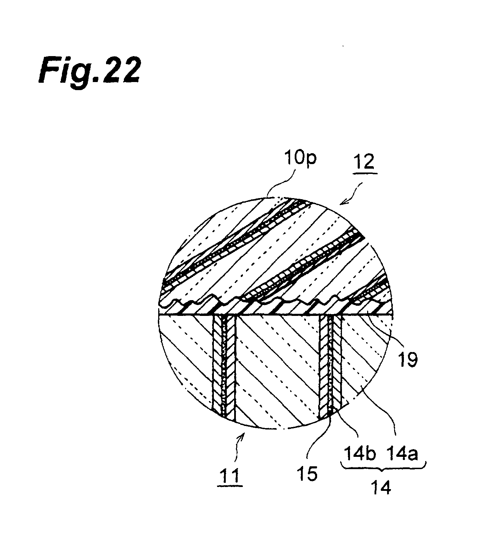

Further, though the gap 16 between the input optical member 11 and the output optical member 12 is filled with the air in the optical device 10 in accordance with the above-mentioned embodiment, the gap 16 between the input optical member 11 and the output optical member 12 may be filled with a light-transmitting material 19 such as oil, adhesive, or the like as shown in Fig. 22. When the gap 16 is filled with the light-transmitting material 19 having a refractive index lower than that of the core 14a of the optical fibers 14 constituting the output optical member 12, light can efficiently be scattered at the entrance surface 12a of the output optical member 12. When an adhesive is employed as the light-transmitting material 19, on the other hand, the input optical member 11 and the output optical member 12 can firmly be joined together.

Also, though a grinding method using Green Carborundum is employed for turning the exit surface 11b of the input optical member 11 or the entrance surface 12a of the output optical member 12 into a rough surface in the optical device 10 in accordance with the above-mentioned embodiment, a grinding method using chemical etching, sand blasting, or the like may be employed as well.

Here, the above-mentioned various modifications can similarly apply to the optical devices 20 and 30 in accordance with the above-mentioned modified examples as well.

(7) Modified Example of Imaging Unit Using Optical Device According to Embodiment of Present Invention

Though the above-mentioned imaging unit 100 mainly comprises the above-mentioned optical device 10 and CCD 101, it may mainly comprise the optical device 20 in accordance with the above-mentioned modified example and the CCD 101.

Also, though all the side faces of each optical device are provided with the light-shielding material 102 in the above-mentioned imaging unit 100, it may not be formed on all the side faces. In the case where the optical device 20 in accordance with the first modified example is used for constituting the imaging unit, in particular, it is preferred that the side faces be formed with a part having no light-shielding material 102 in order for the light to be incident on the entrance surface 22a of the first member 22 constituting the input optical member 21.

(8) Modified Example of Imaging Apparatus Using Optical Device According to Embodiment of Present Invention

A modified example of the imaging apparatus using the optical device in accordance with the embodiment of the present invention will now be explained. Though the imaging apparatus 200 explained with reference to Fig. 9 is constituted by four sets of imaging units 100 explained with reference to Fig. 8, they are not restricted to four sets, but may be varied according to the size of imaging patterns.

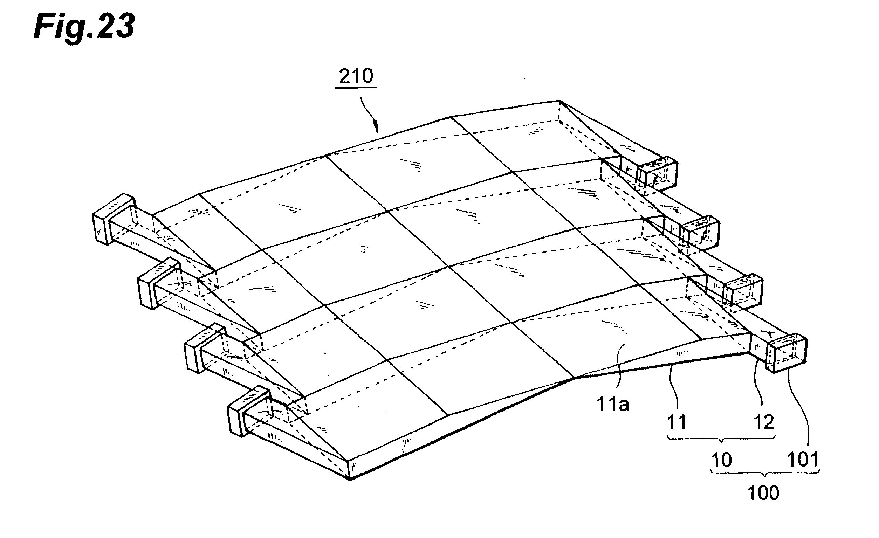

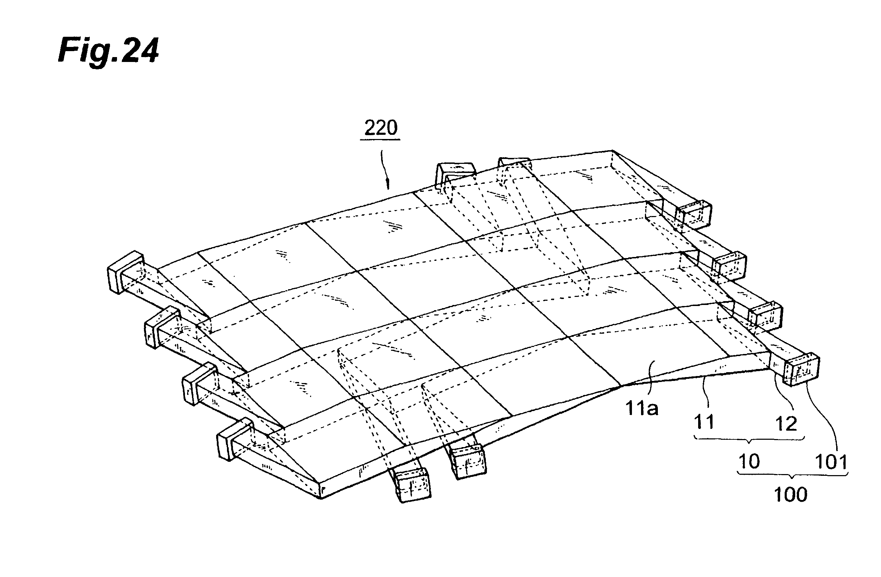

For example, 8 sets of imaging units 100 may be assembled to constitute an imaging apparatus 210 as shown in Fig. 23. Also, 12 sets of imaging units 100 may be assembled to constitute an imaging apparatus 220 as shown in Fig. 24.

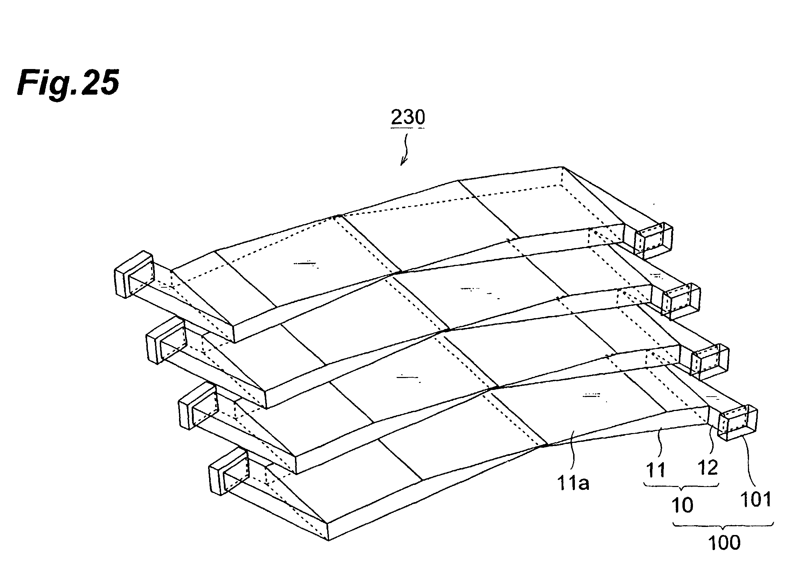

Further, though the individual imaging units 100 are arranged without gaps such that the entrance surfaces 11a of their respective input optical members 11 do not overlap each other, so as to constitute each of the above-mentioned imaging apparatus, the imaging units 100 may be arranged such that the edge side portions of the entrance surfaces 11a of the input optical members 11 overlap each other as in the imaging apparatus 230 shown in Fig. 25. When the edge side portions of the entrance surfaces 11a of the input optical members 11 are arranged in an overlapping fashion, then influences of dead spaces occurring in the edge side portions can be eliminated. Here, data in the overlapping areas can be eliminated by image processing as appropriate.

(9) Modified Example of Radiation Image Sensor Using Optical Device According to Embodiment of Present invention

A modified example of the radiation image sensor using the optical device in accordance with the embodiment of the present invention will now be explained. First, the configuration of the radiation image sensor in accordance with this modified example will be explained. Though the entrance surface 11a of the input optical member 11 is roughly ground in the radiation image sensor 300 explained with reference to Fig. 10 in order for the light generated upon incidence of a radiation on the phosphor 301 to efficiently enter the input optical member 11, a flat optical member 311 as indicated in the following may be provided instead of roughly grinding the entrance surface 11a of the input optical member 11. It will be explained in detail in the following.

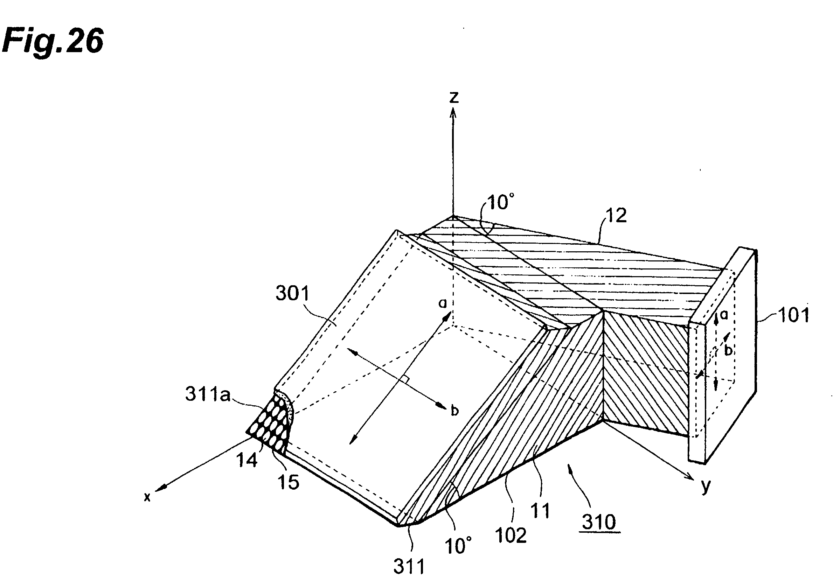

The radiation image sensor 310 comprises, as shown in Fig. 26, the above-mentioned imaging unit 100 (i.e., imaging unit 100 comprising the input optical member 11, the output optical member 13, the CCD 101, and the light-shielding material 102); the flat optical member 311 disposed on the entrance surface 11a of the input optical member 11 constituting the imaging unit 100; and the phosphor 301, disposed on the entrance surface 311a of the flat optical member 311, for emitting light upon incidence of a radiation. Here, for securing a demagnification of incident images, the entrance surface ha of the input optical member 11 forms an angle of 10° with the optical axis, and the entrance surface 12a of the output optical member 12 forms an angle of 10° with the optical axis.

The flat optical member 311 is composed of a number of optical fibers 14 arranged parallel to each other and integrally formed. Also, the flat optical member 311 has the entrance surface 311a obliquely cut with respect to the optical axis at an angle of 50° and an exit surface 311b cut parallel to the entrance surface 311a, whereas all the surfaces of the flat optical member 311 excluding the entrance surface 311a and exit surface 311b are covered with the light-shielding material 102. The entrance surface 311a of the flat optical member 311 is formed with the phosphor 301 adapted to emit light upon incidence of a radiation.

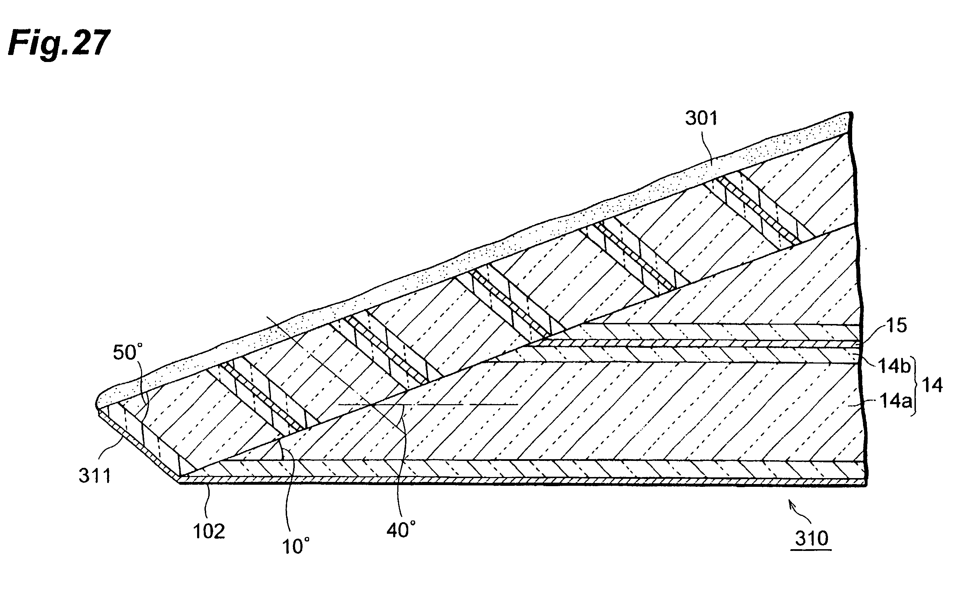

The exit surface 311b of the flat optical member 311 and the entrance surface 11a of the input optical member 11 are in contact with each other, the exit surface 11b of the input optical member 11 and the entrance surface 12a of the output optical member 12 are in contact with each other, and the exit surface 12b of the output optical member 12 and the light-receiving surface of the CCD 101 are in contact with each other. Here, as shown in Fig. 27 which is an enlarged sectional view of the radiation image sensor 310 taken along a plane parallel to the xz plane of Fig. 26, the flat optical member 311 and the input optical member 11 are arranged such that the angle (40° ) formed between the optical axis of the flat optical member 311 and the optical axis of the input optical member 11 is the difference between the angle (50° ) formed between the optical axis of the flat optical member 311 and its exit surface 311b and the angle (10° ) formed between the optical axis of the input optical member 11 and its entrance surface 11a.

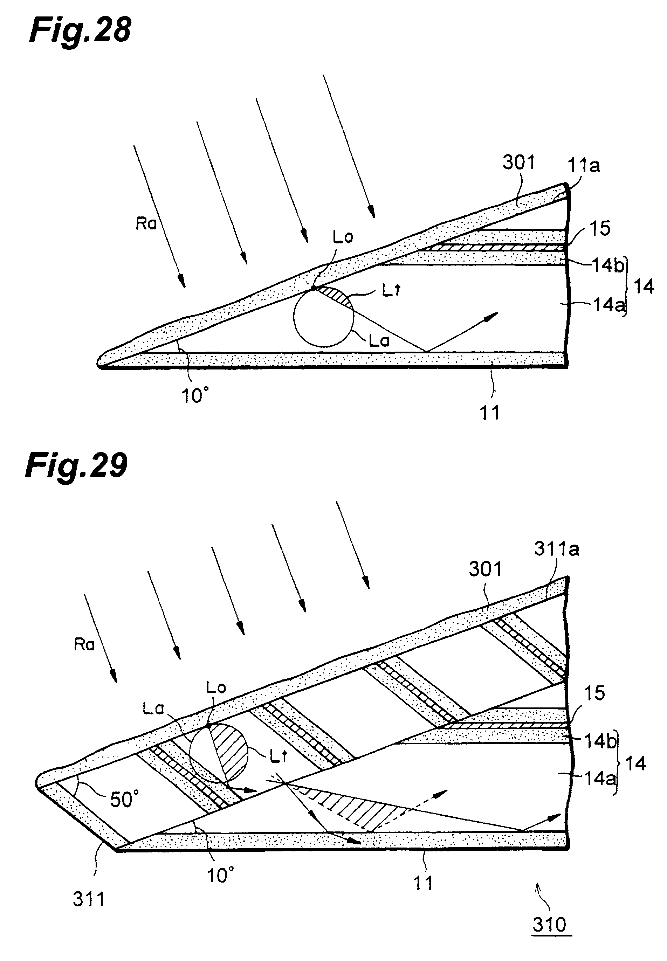

Operations and effects of the radiation image sensor 310 will now be explained. Fig. 28 shows the state of incidence of light in the case where the light emitted by the phosphor upon incidence of a radiation enters the entrance surface 11a of the input optical member 11 without the aid of the flat optical member 311, whereas Fig. 29 shows the state of incidence of light in the case where the light enters the entrance surface 311a of the flat optical member 311.

$L_a$ shown in Figs. 28 and 29 is a circle indicating the advancing direction and intensity of the light emitted at $L_0$ as with the one shown in Figs. 12 and 13. Here, the length of the chord formed by a line drawn from $L_0$ in a specific direction and this circle indicates the intensity of light advancing in the specific direction. Also, the hatched area $L_t$ indicates, of the light emitted at $L_0$, the part propagating through the optical fibers 14 constituting the optical members while satisfying the total reflection condition.

Here, in the case where the flat optical member 311 is not provided, as shown in Fig. 28, of the diffused light $L_a$ emitted from $L_0$, the ratio of light (hatched area $L_t$) propagating through the optical fibers 14 constituting the input optical member 11 while satisfying the total reflection condition is quite small, since the angle formed between the normal direction of the entrance surface 11a and the optical axis is large. By contrast, in the case where the flat optical member 311 is provided, as shown in Fig. 29, the angle formed between the normal direction of the entrance surface 311a and the optical axis can be reduced, so that, of the diffused light $L_a$ emitted from $L_0$, the ratio of light (hatched area $L_t$) propagating through the optical fibers 14 constituting the flat optical member 311 while satisfying the total reflection condition can be increased. As a result, the amount of light transmitted through each of the optical members constituting the radiation image sensor 310 increases, whereby a quite clear captured image can be obtained by the CCD 101.

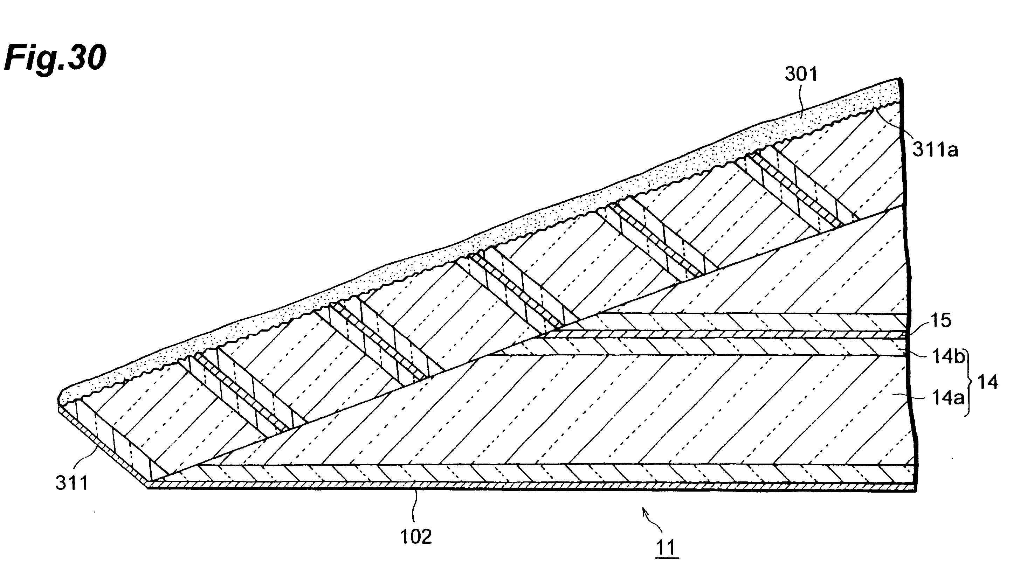

Also, when the flat optical member 311 is provided as mentioned above, the entrance surface 311a of the flat optical member 311 may be ground, as shown in Fig. 30, such that the center-line average roughness lies within the range of 0.20 to 0.80 μm. When the entrance surface 311a of the flat optical member 311 is roughly ground, the light generated upon incidence of a radiation on the phosphor 301 is scattered by the entrance surface 311a of the flat optical member 311, so that the light is incident on the flat optical member 311 with a wider angle of incidence, whereby the ratio of light advancing through each optical member while satisfying the total reflection condition increases.

Though the entrance surface 11a of the input optical member 11 constituting the radiation image sensor 300 or the entrance surface 311a of the flat optical member 311 constituting the radiation image sensor 310 is ground such that the center-line average roughness lies within the range of 0.20 to 0.80 μm, the following configuration may be employed as well.

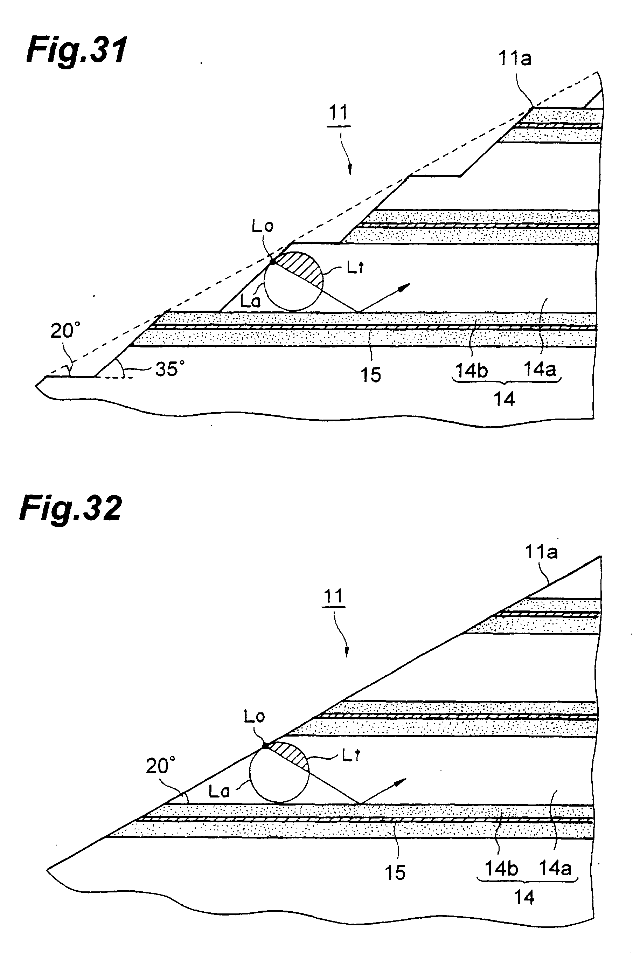

Namely, as shown in Fig. 31, the entrance surface 11a of the input optical member 11 may be cut stepwise in its tilting direction. As a consequence of such processing, while the entrance surface as a whole maintains an angle of 20° with respect to the optical axis, portions having an angle of 35° with respect to the optical axis are partly formed therein. As a result, the angle formed between the normal of such a portion and the fiber axis becomes smaller, whereby the ratio of light propagating through each optical member while satisfying the total reflection condition can be increased as compared with the input optical member 11 shown in Fig. 32 uniformly having an angle of 20° with respect to the optical axis.

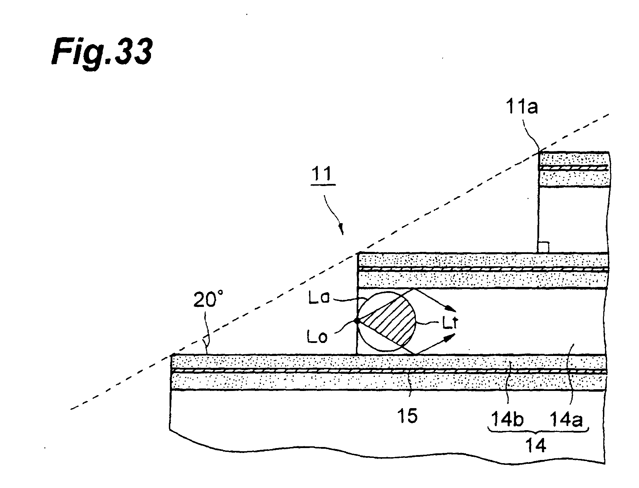

Also, as shown in Fig. 33, the entrance surface 11a of the input optical member 11 can be processed stepwise such that it becomes partly perpendicular to the optical axis. Such processing also makes it possible to increase the ratio of light propagating through each optical member while satisfying the total reflection condition as compared with the input optical member 11 shown in Fig. 32 uniformly having an angle of 20° with respect to the optical axis.

**Industrial Applicability**

As mentioned above, the optical device of the present invention can be used in radiation image sensors and fingerprint identifying apparatus, for example.

**Claims**

1.    An optical device (10) comprising:

a first optical member (11), composed of a plurality of optical fibers (14) arranged parallel to each other along an optical axis and being integrally formed, having a first entrance surface (11a) and a first exit surface (11b) which intersect the optical axis at respective angles of $\alpha_1,\beta_1$; and

a second optical member (12), composed of a plurality of optical fibers arranged parallel to each other along another optical axis and being integrally formed, having a second entrance surface (12a) and a second exit surface (12b) which intersect the other optical axis at respective angles of $\alpha_2,\beta_2$, wherein said first exit surface (11b) and said second entrance surface (12a) are fixed in contact with or close to each other, **characterised in that**

at least one of said first exit surface (12b) and second entrance surface (12b) is ground so as to have a center-line average roughness within the range of 0.20 to 0.80 μm.

2.    An imaging unit (100) comprising:

the optical device (10) according to claim 1; and

an imaging device (101) disposed in contact with said second exit surface (12b).

3.    An imaging unit (100) according to claim 2, wherein at least a part of surfaces of said first optical member (11) and second optical member (12) is provided with a light-shielding material (102).

4.    An imaging apparatus (200) having a plurality of sets of the imaging units (100) according to claim 2,

wherein said plurality of sets of imaging units (100) are arranged such that the respective first entrance surfaces of said imaging units substantially align on an identical plane.

5.    A radiation image sensor (310) comprising:

the imaging unit (100) according to claim 2; and

a phosphor (301), disposed on said first entrance surface (11a), for emitting light upon incidence of a radiation.

6. A radiation image sensor according to claim 5, wherein said first entrance surface (11a) is ground so as to yield a center-line average roughness within the range of 0.20 to 0.80 μm.

7. A fingerprint identifying apparatus (400) comprising:

   an imaging unit (100) for capturing an image of a fingerprint;
   a fingerprint identifying section (401) for identifying the fingerprint image captured by said imaging unit with a reference pattern registered beforehand; and
   a display section (402) for displaying a result of identification obtained by said fingerprint identifying section;

   wherein said imaging unit (100) is the imaging unit according to claim 2.

**Patentansprüche**

1. Optische Einrichtung (10), mit:

   einem ersten optischen Glied (11), das sich aus einer Vielzahl von Lichtleitfasern (14) zusammensetzt, die parallel zueinander entlang einer optischen Achse angeordnet und eingebaut sind, mit einer ersten Eintrittsoberfläche (11a) und einer ersten Austrittsoberfläche (11b), die die optische Achse unter den Winkeln $\alpha_1$ beziehungsweise $\beta_1$ kreuzen; und
   einem zweiten optischen Glied (12), das sich aus einer Vielzahl von Lichtleitfasern zusammensetzt, die parallel zueinander entlang einer anderen optischen Achse angeordnet und eingebaut sind, mit einer zweiten Eintrittsoberfläche (12a) und einer zweiten Austrittsoberfläche (12b), die die andere optische Achse unter den Winkeln von $\alpha_2$ beziehungsweise $\beta_2$ kreuzen,
   wobei die erste Austrittsoberfläche (11b) und die zweite Eintrittsoberfläche (12a) fest in Kontakt miteinander oder eng aneinander sind,

   **dadurch gekennzeichnet, daß**
   wenigstens eine der Oberflächen, zu der die erste Austrittsoberfläche (12b) und die zweite Eintrittsoberfläche (12b) gehört, Grundfläche ist, um eine durchschnittliche Mittenlinienrauhigkeit in einem Bereich von 0,20 bis 0,80 μm entstehen zu lassen.

2. Abbildungseinheit (100), mit:

   der optischen Einrichtung (10) nach Anspruch 1; und
   einer Abbildungseinrichtung (101), die in Kontakt mit der zweiten Austrittsoberfläche (12b) steht.

3. Abbildungseinheit (100) nach Anspruch 2, bei der wenigstens ein Teil der Oberflächen des ersten optischen Gliedes (11) und ein zweites optisches Glied (12) mit einem Lichtabschirmmaterial (102) vorgesehen ist.

4. Abbildungsgerät (200) mit einer Vielzahl von Sätzen der Abbildungseinheiten (100) nach Anspruch 2, bei der die Vielzahl von Sätzen von Abbildungseinheiten (100) so angeordnet ist, daß jeweilige erste Eintrittsoberflächen der Abbildungseinheit im wesentlichen auf einer identischen Ebene ausgerichtet sind.

5. Strahlungsbildsensor (310), mit:

   der Abbildungseinheit (100) nach Anspruch 2; und
   einem Leuchtmittel (301), das auf der ersten Eintrittsoberfläche (11a) angeordnet ist, um bei Eintreffen von Strahlung Licht zu emittieren.

6. Strahlungsbildsensor nach Anspruch 5, bei dem die erste Eintrittsoberfläche (11a) Grundfläche ist, um eine durchschnittliche Mittenlinienrauhigkeit innerhalb des Bereichs von 0,20 bis 0,80 μm zu erzielen.

7. Fingerabdruck-Identifiziergerät (400) mit:

   einer Abbildungseinheit (100) zum Aufnehmen eines Bildes eines Fingerabdrucks;
   einem Fingerabdruck-Identifizierabschnitt (401), der das von der Abbildungseinheit aufgenommene Fingerabdruckbild mit einem zuvor registrierten Bezugsmuster vergleicht; und
einem Anzeigeabschnitt (402), der ein Ergebnis vom Fingerabdruck-Identifizierabschnitt anzeigt;

wobei die Abbildungseinheit (100) die Abbildungseinheit gemäß Anspruch 2 ist.

**Revendications**

1.  Dispositif optique (10), comprenant :

    un premier élément optique (11), se composant d'une pluralité de fibres optiques (14) disposées en étant parallèles les unes aux autres le long d'un axe optique et étant formées d'un seul tenant, comportant une première surface d'entrée (11a) et une première surface de sortie (11b) qui croisent l'axe optique sous des angles respectifs $\alpha_1$, $\beta_1$ ; et
    un second élément optique (12), se composant d'une pluralité de fibres optiques disposées parallèlement les unes aux autres le long d'un autre axe optique et étant formées d'un seul tenant, comportant une seconde surface d'entrée (12a) et une seconde surface de sortie (12b) qui croisent l'autre axe optique sous des angles respectifs $\alpha_2$, $\beta_2$, dans lequel la dite première surface de sortie (11b) et la dite seconde surface d'entrée (12a) sont fixées au contact ou à proximité l'une de l'autre, **caractérisé en ce que**
    au moins l'une de la dite première surface de sortie (12b) et de la dite seconde surface d'entrée (12a) est rectifiée de manière à avoir une rugosité moyenne de ligne centrale comprise entre 0,20 et 0,80 µm.

2.  Unité d'imagerie (100), comprenant :

    le dispositif optique (10) selon la revendication 1 ; et
    un dispositif d'imagerie (101) disposé au contact de la dite seconde surface de sortie (12b).

3.  Unité d'imagerie (100) selon la revendication 2, dans laquelle au moins une partie des surfaces du dit premier élément optique (11) et du dit second élément optique (12) est pourvue d'un matériau de protection contre la lumière (102).

4.  Dispositif d'imagerie (200) comportant une pluralité d'ensembles des unités d'imagerie (100) selon la revendication 2,
    dans lequel la dite pluralité d'ensembles d'unités d'imagerie (100) sont disposés de telle sorte que les premières surfaces d'entrée respectives des dites unités d'imagerie s'alignent sensiblement sur un plan identique.

5.  Capteur d'image par rayonnement (310), comprenant :

    l'unité d'imagerie (100) selon la revendication 2 ; et
    un phosphore (301), disposé sur la dite première surface d'entrée (11a), pour émettre de la lumière lorsqu'un rayonnement est incident.

6.  Capteur d'image par rayonnement selon la revendication 5, dans lequel la dite première surface d'entrée (11a) est rectifiée de manière à avoir une rugosité moyenne de ligne centrale comprise entre 0,20 et 0,80 µm.

7.  Dispositif d'identification d'empreinte digitale (400), comprenant :

    une unité d'imagerie (100) pour capturer une image d'une empreinte digitale ;
    une section d'identification d'empreinte digitale (401) pour identifier l'image d'empreinte digitale capturée par la dite unité d'imagerie selon une configuration de référence enregistrée au préalable ; et
    une section d'affichage (402) pour afficher un résultat de l'identification obtenue par la dite section d'identification d'empreinte digitale ;

    dans lequel la dite unité d'imagerie (100) est l'unité d'imagerie selon la revendication 2.

**Fig.1**

EP 1 008 874 B1

# Fig.2

*Fig.3*

# Fig.4

**Fig.5**

EP 1 008 874 B1

# Fig.6

**Fig.7**

*Fig.8*

# Fig.9

EP 1 008 874 B1

**Fig.10**

EP 1 008 874 B1

## Fig.11

EP 1 008 874 B1

*Fig.12*

*Fig.13*

**Fig.14**

400

4

100

401

402

EP 1 008 874 B1

*Fig.15*

EP 1 008 874 B1

**Fig.16**

*Fig.17*

EP 1 008 874 B1

*Fig.18*

*Fig.19*

*Fig.20*

## Fig.21

# *Fig.22*

*Fig.23*

EP 1 008 874 B1

*Fig.24*

EP 1 008 874 B1

Fig.25

EP 1 008 874 B1

*Fig.26*

Fig.27

## Fig.28

## Fig.29

# Fig.30

EP 1 008 874 B1

*Fig.31*

*Fig.32*

## Fig.33